# FASCICULE DE BREVET EUROPEEN

(11) **EP 0 551 233 B1**
(45) Date de publication et mention de la délivrance du brevet: **15.11.1995**
(21) Numéro de dépôt: 93400028.2
(22) Date de dépôt: 08.01.1993
(51) Int. Cl.: B64D 1/00, F42B 10/56

(54) **Système d'inclinaison d'un objet suspendu à galet tendeur de suspente**
Neigungssystem für einen aufgehängten Gegenstand mit Spannrolle für Fangleine
Tilt system for a suspended object with a suspension line tension roller

(30) Priorité: 10.01.1992 FR 9200206
(43) Date de publication de la demande: 14.07.1993
(73) Titulaire: THOMSON-BRANDT ARMEMENTS, 45240 La Ferté St. Aubin (FR)
(72) Inventeur: Amiot, Bernard, F-92402 Courbevoie Cédex (FR); Doisneau, Gilles, F-92402 Courbevoie Cédex (FR); Frehaut, Jean-Pierre, F-92402 Courbevoie Cédex (FR); Morin, Serge, F-92402 Courbevoie Cédex (FR)
(74) Mandataire: Benoit, Monique

(56) Documents cités:
- FR-A- 2 642 159
- GB-A- 1 186 738
- US-A- 3 301 511

## Description

La présente invention concerne un système d'inclinaison d'un objet suspendu à des suspentes utilisant un galet tendeur mobile. Elle s'applique notamment à des sous-munitions de type dit "à balayage spiral" équipées de détecteurs de cible actionnant la charge militaire, chaque sous-munitions ayant un mouvement de rotation et étant suspendue à un parachute suivant un angle donné et sensiblement constant par rapport à la verticale de manière à permettre au détecteur d'effectuer un balayage spiral du sol pendant la chute de la sous-munition. Plus généralement, l'invention s'applique à des objets suspendus par des suspentes à un point de suspension quelconque et dont il est nécessaire d'assurer une variation de l'inclinaison par rapport à la verticale.

Initialement, l'axe de symétrie de la sous-munition est généralement parallèle à la verticale. Pour lui donner un angle donné par rapport à la verticale, une solution couramment utilisée consiste à allonger une partie des suspentes de la sous-munition, les autres suspentes gardant leur longueur constante, de manière à incliner la sous-munition en utilisant le travail développé par la force de traction ou traînée aérodynamique du parachute. Afin de rendre les obus anti-chars plus performants, il est souhaitable d'augmenter le nombre de sous-munitions qu'ils contiennent. Cette augmentation est difficile à atteindre tant que le système d'inclinaison de chaque sous-munition reste encombrant.

Afin d'obtenir un mouvement d'inclinaison précis et suffisamment lent pour ne pas déclencher des mouvements de balancements gênants, les solutions actuelles utilisent fréquemment un système mécanique mobile intermédiaire entre les suspentes et la sous-munition. Ce système mécanique assure un guidage précis et un verrouillage en fin de course. Une telle solution est décrite par exemple dans le brevet français n° 2.642.159.

Néanmoins ce type de solution peut s'avérer trop encombrant dans certaines réalisations.

Le but de l'invention est de pallier les inconvénients précités.

A cet effet, l'invention a pour objet un système d'inclinaison d'un objet suspendu comportant au moins trois suspentes et un point de suspension, l'objet étant suspendu au point de suspension par les suspentes, les suspentes étant chacune fixées au point de suspension et fixées à l'objet par des points de fixation, caractérisé en ce qu'il comporte en outre un galet et des moyens de déplacement du galet fixés sur l'objet, une suspente étant déviée et tendue par le galet, l'inclinaison de l'objet étant réalisée par le déplacement du galet suivant un mouvement commandé par les moyens de déplacement.

L'invention a pour principaux avantages qu'elle est peu encombrante, qu'elle permet à la sous-munition d'adopter un angle donné avec la verticale sans instabilité, qu'elle est simple à mettre en oeuvre et qu'elle est économique.

D'autres caractéristiques et avantages de l'invention apparaîtront à l'aide de la description qui suit faite en regard des dessins annexés qui représentent :
- la figure 1, une illustration de la chute d'un projectile suspendu à un parachute suivant un angle d'inclinaison donné par rapport à la verticale,
- la figure 2a, un projectile suspendu non incliné,
- la figure 2b, un schéma explicatif de systèmes d'inclinaison d'un projectile suspendu selon l'art antérieur,
- les figures 3a; 3b 4a et 4b, des schémas explicatifs du système d'inclinaison selon l'invention,
- les figures 5a et 5b, une variante du mode de réalisation précité.

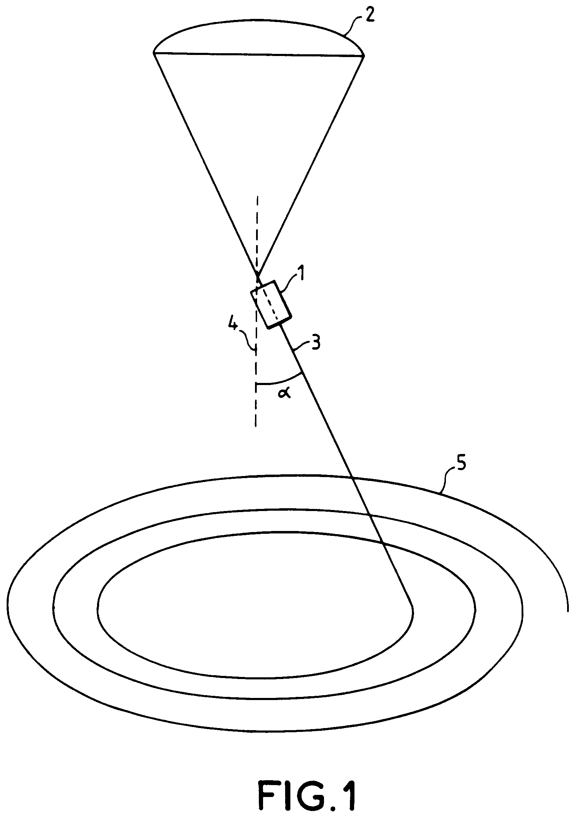

La figure 1 illustre la chute d'un projectile 1, une sous-munition larguée depuis un obus par exemple. Ce projectile 1 est suspendu à un parachute 2. Le projectile 1 est équipé par exemple d'un détecteur d'axe sensible orienté suivant le faisceau 3. Ce faisceau 3 fait un angle α sensiblement constant avec la verticale symbolisée par le trait interrompu 4. Durant la chute de l'objet 1, animé d'un mouvement de rotation autour de la verticale le faisceau 3 réalise alors un balayage spiral 5 sur le sol.

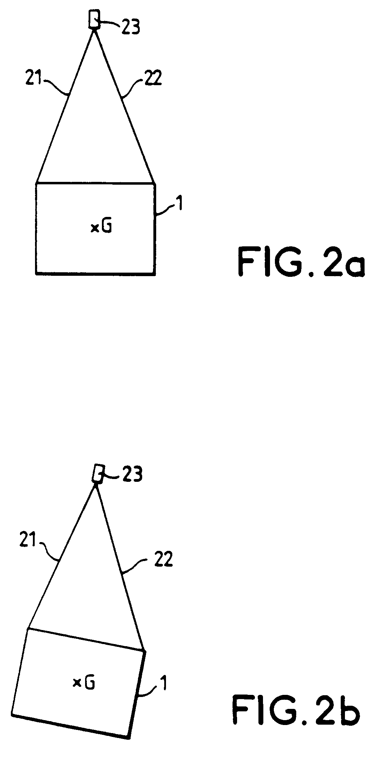

La figure 2a présente de façon schématique la position d'un objet 1 suspendu non incliné, par exemple la position du projectile 1 après le déploiement du parachute 2 et avant qu'il ait été incliné. L'objet 1 est suspendu à un point de suspension 23 par trois suspentes 21, 22., deux suspentes apparaissant superposées en position 22. L'objet possède un centre de gravité dont la position est repérée par le point G en projection dans le plan de la figure.

La figure 2b est un schéma explicatif de systèmes d'inclinaison de l'objet 1 selon l'art antérieur qui consiste à maintenir constante une suspente 21 et à allonger l'autre suspente 22. Dans ce cas, la position du centre de gravité G de l'objet est abaissée par rapport à sa position antérieure. L'inclinaison de l'objet 1 ne nécessite pas ici théoriquement d'énergie puisque, le centre de gravité G étant abaissé, elle peut se faire sous l'effet d'une force de traction, celle d'un parachute par exemple. Néanmoins, dans certaines applications, pour éviter que l'action de la force de traction provoque un brusque mouvement d'inclinaison, il est nécessaire d'adjoindre à ces systèmes des dispositifs mécaniques pour ralentir et stabiliser cette inclinaison. Cela rend ces systèmes complexes et surtout trop encombrants dans certains cas d'application.

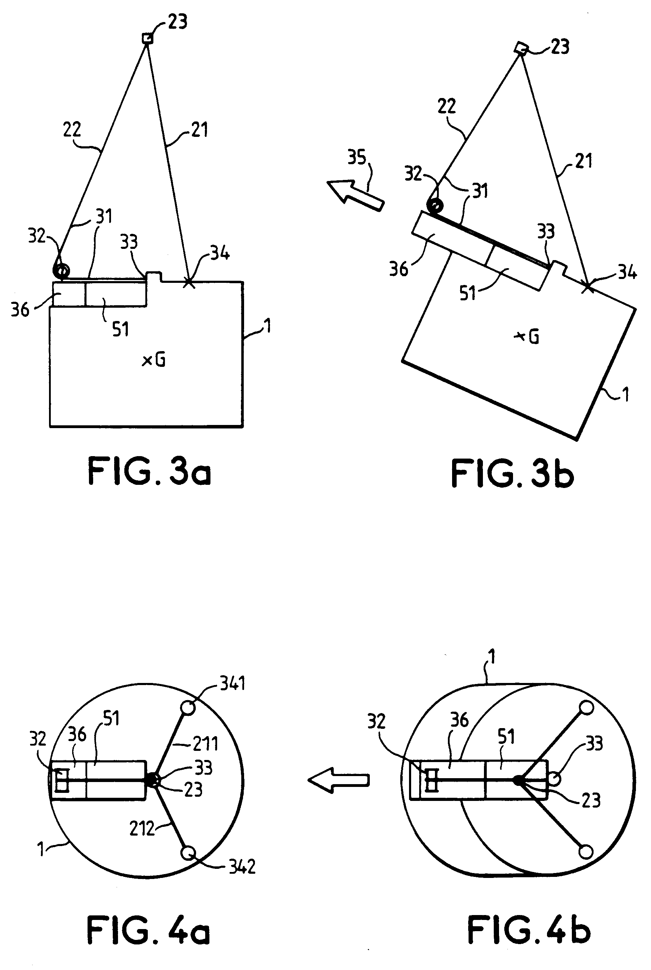

Les figures 3a et 3b illustrent le fonctionnement du système d'inclinaison selon l'invention. Sur la figure 3a, l'objet 1 est toujours suspendu à un point de suspension 23 par deux suspentes 21 représentée superposées sur la figure et par une troisième suspente 31. Les premières suspentes 21 sont fixées à l'objet en deux points de fixation 34 et la troisième suspente 31 est fixée à l'objet en un point de fixation 33. Entre le point de suspension 23 et le point de fixation 33, la troisième suspente 31 est déviée et tendue par un galet 32. L'action de la suspente 31 sur l'objet 1 est donc équivalente à l'action d'une suspente théorique 22 qui relierait directement le point de suspension 23 d'un point de fixation occupant la position du galet 32.

La figure 3b présente l'objet 1 en position inclinée. Selon l'invention, cette inclinaison est réalisée en déplaçant le galet 32 par un mouvement de translation suivant la flèche 35 de façon à éloigner la suspente théorique 22. La longueur de la suspente 31 étant fixe, le déplacement du galet 32 équivaut à une réduction de la longueur de la suspente théorique 22. En conséquence, l'objet 1 subit un mouvement d'inclinaison. Avantageusement, celui-ci peut être contrôlé par le déplacement du galet, ce déplacement étant provoqué par des moyens de déplacement 51 solidaires de l'objet à incliner. Un travail étant nécessaire pour assurer l'élévation du centre de gravité G contre l'action de la force de pesanteur, ces moyens de déplacement doivent être activés par une source d'énergie. Les moyens de déplacement du galet 32 peuvent être réalisés par exemple, par un ressort dont la décompression déclenche la course d'un piston 36 solidaire du galet 32. Ils peuvent aussi être constitués d'un vérin pyrotechnique dont la course du piston , solidaire du galet 32, est préférentiellement amortie. Ces moyens contiennent par ailleurs un dispositif de verrouillage permettant de maintenir la position du galet 32 constante, c'est-à-dire de conserver la position inclinée de l'objet. Dans le cas d'utilisation d'un vérin pyrotechnique, celui-ci a l'avantage d'être très peu encombrant. Enfin, ces moyens ont l'avantage de pouvoir être utilisés pour d'autres fonction, en particulier dans le cas d'une sous-munition anti-char, ces moyens de déplacement du galet peuvent être utilisés simultanément pour déployer l'optique d'un détecteur infrarouge par exemple, sur lequel le galet peut être fixé.

Les figure 4a et 4b sont respectivement des vues de dessus des la figure 3a et 3b. L'objet est suspendu à un point de suspension 23 par trois suspentes 211, 212, 31. Par rapport aux figures précédentes, les suspentes 21 sont nommées 211 et 212 Celles-ci sont fixées l'une à un point de fixation 341, l'autre à un point de fixation 342. La suspente 31 est fixée au point de suspension 23 et au point de fixation 33. Elle est déviée par le galet 32. Les points 341, 342 et le galet 32 forment par exemple un triangle isocèle, les côtés formés par les points 341 et 32 d'une part, et par les points 342 et 32 d'autre part étant alors égaux. L'objet 1 est équipé de moyens de déplacement 51 permettant de maintenir le galet 32 et de le déplacer. Le galet 32 peut par exemple être une poulie. Les moyens de déplacement 51 peuvent par exemple être un vérin, notamment pyrotechnique dont le piston 36 est solidaire mécaniquement de la poule 32, le vérin étant lui-même fixé par exemple à l'objet 1. Le vérin 51 fournit l'énergie nécessaire au déplacement de la poulie 32, c'est-à-dire en fait à l'élévation du centre de gravité G de l'objet 1.

Pour que cette inclinaison reste stable, le vérin conserve sa position en fin de course grâce à un dispositif de verrouillage. Le déplacement du vérin peut être préférentiellement contrôlé, en particulier, il peut se déplacer lentement, à condition que le vérin dispose de moyens d'amortissement interne, s'il est pyrotechnique. Cela permet à l'objet 1 d'adopter une position d'inclinaison sans mouvements brusques susceptibles d'entraîner une instabilité. Le déclenchement du vérin 51 peut être commandé suivant un retard prédéterminé. Les suspentes 31, 211, 212 peuvent être des rubans réalisées dans un matériau peu extensible ou non extensible, en polyamide aromatique par exemple. Pour des raisons d'encombrement, le point de fixation 33 peut être désaligné par rapport au point de suspension 23 et à la poulie 32. En effet, selon les cas, ce point de fixation 33 ne peut pas être placé sous le vérin 51, en particulier si celui-ci est fixé très près du dessus de l'objet 1, voire fixé sur le dessus de l'objet. C'est le cas notamment quand il est nécessaire de réduire la hauteur globale de l'objet 1. Le désalignement du point de fixation 33 n'empêche nullement l'objet de s'incliner selon l'invention par déplacement de la poulie 32. Il est nécessaire cependant que la poulie soit orientée selon une bissectrice des deux parties de la suspente situées de part et d'autre de la poule afin d'éviter les risques de frottement et de blocage.

Dans le mode de réalisation des figures 4a et 4b, les moyens de déplacement assurant le déplacement de la poule 32 ont été donnés à titre d'exemple comme étant un vérin, notamment pyrotechnique, mais il est possible de remplacer ce vérin par d'autres dispositifs, en particulier par des systèmes à ressort.

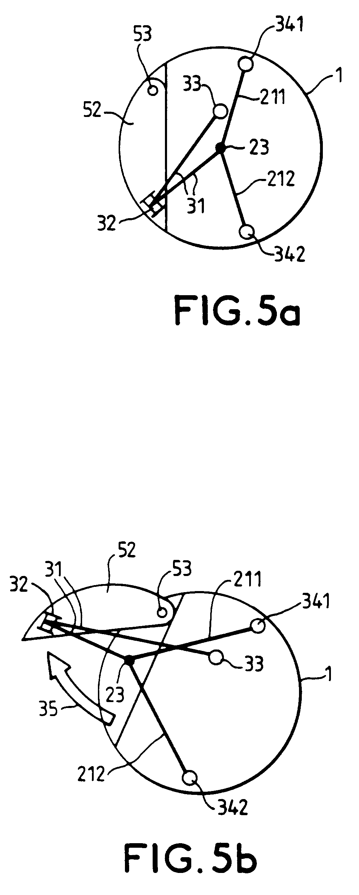

Les figures 5a et 5b montrent un autre type de réalisation ou le galet 32 est fixé à un élément, par exemple une optique infrarouge, pivotant 52 autour d'un point 53 solidaire de l'objet 1.

Ces figures sont homologues aux figures 4a et 4b. Le vérin de déploiement de l'élément pivotant 52 et du galet 32 n'a pas été représenté. Dans ce cas, le point de fixation 33 est désaligné par rapport au point de suspension 23 et au galet 32.

## Revendications

1. Système d'inclinaison d'un objet suspendu comportant au moins trois suspentes (211, 212, 31) et un point de suspension (23), l'objet (1) étant suspendu au point de suspension (23) par les suspentes,les suspentes étant chacune fixées au point de suspension (23) et fixées à l'objet (1) par des points de fixation (33 341, 342), caractérisé en ce qu'il comporte en outre un galet (32) et des moyens de déplacement (51, 52) du galet (32) fixés sur l'objet (1), une suspente (31) étant déviée et tendue par le galet (32), l'inclinaison de l'objet (1) étant réalisée par le déplacement du galet (32) suivant un mouvement commandé par les moyens de déplacement (51, 52).

2. Système selon la revendication 1, caractérisé en ce que le galet (32) déviant la suspente (31) est une poulie.

3. Système selon l'une quelconque des revendications précédentes, caractérisé en ce que les moyens de déplacement (51) du galet (32) déviant la suspente (31) sont constitués par un vérin (51) fixé sur l'objet (1), le galet (32) étant solidaire du piston (36) du vérin.

4. Système selon la revendication 3, caractérisé en ce que le galet (32) est fixé sur un élément pivotant (52) autour d'un point (53) solidaire de l'objet (1) et capable de se déployer par un mouvement de rotation sous l'action du vérin (51).

5. Système selon les revendications 3 ou 4, caractérisé en ce que le vérin (51) est un vérin pyrotechnique.

6. Système selon l'une quelconque des revendications précédentes, caractérisé en ce que les suspentes (211, 212, 31) sont des rubans en matériau inextensible.

7. Système selon l'une quelconque des revendications précédentes, caractérisé en ce que les suspentes (211, 212, 31) sont en polyamide aromatique.

8. Système selon l'une quelconque des revendications précédentes, caractérisé en ce que l'objet (1) est un projectile suspendu à un parachute.

9. Système selon l'une quelconque des revendications précédentes, caractérisé en ce que l'objet (1) est une sous-munition.

## Claims

1. A system for tilting a suspended object comprising at least three suspension lines (211, 212, 31) and a suspension point (23), said object (1) being suspended at the point of suspension (23) by the suspending lines, the suspending lines being respectively fixed at the point (23) of suspension and fixed to the object (1) by fixation points (33, 341, 342), characterized in that it furthermore comprises a roller (32) and displacement means (51, 52) for the roller (32) fixed to the object (1), one suspension line (31) being deflected and held by the roller (32), tilting of the object (1) being caused by the displacement of the roller (32) in accordance with a movement controlled by the displacement means (51, 52).

2. The system as claimed in claim 1, characterized in that the roller deflecting the suspension lines (31) is a pulley.

3. The system as claimed in either of the preceding claims, characterized in that the displacement means (51) for the roller (32) deflecting the suspension line (31) are constituted by a jack (51) fixed on the object (1), said roller (32) being integral with the piston (36) of said jack.

4. The system as claimed in claim 3, characterized in that the roller (32) is fixed on an element (52) adapted to pivot about a point (53) integral with the object (1) and capable of deploying with a rotary movement under the action of the jack (51).

5. The system as claimed in claim 3 or claim 4, characterized in that the jack (51) is a pyrotechnic jack.

6. The system as claimed in any one of the preceding claims, characterized in that the suspension lines (211, 212, 31) are tapes of an non-extensible material.

7. The system as claimed in any one of the preceding claims, characterized in that the suspension lines (211, 212, 31) are manufactured of an aromatic polyamide.

8. The system as claimed in any one of the preceding claims, characterized in that said object (1) is a projectile suspended from a parachute.

9. The system as claimed in any one of the preceding claims, characterized in that the object (1) is an item of submunition.

## Patentansprüche

1. System zur Neigung eines aufgehängten Objekts, mit wenigstens drei Fangleinen (211, 212, 31) und einem Aufhängungspunkt (23), wobei das Objekt (1) in dem Aufhängungspunkt (23) mittels der Fangleinen aufgehängt ist, wobei jede Fangleine an dem Aufhängungspunkt (23) befestigt ist und an dem Objekt (1) durch Befestigungsstellen (33, 341, 342) befestigt ist, dadurch gekennzeichnet, daß es außerdem eine Rolle (32) sowie an dem Objekt (1) befestigte Mittel (51, 52) zur Verstellung der Rolle (32) enthält, wobei eine Fangleine (31) von der Rolle (32) umgelenkt und gespannt ist, wobei die Neigung des Objekts (1) durch die Verstellung der Rolle (32) gemäß einer Bewegung erzielt wird, die von den Verstellmitteln (51, 52) gesteuert ist.

2. System nach Anspruch 1, dadurch gekennzeichnet, daß die Rolle (32), welche die Fangleine (31) umlenkt, eine Seilrolle ist.

3. System nach einem der vorhergehenden Ansprüche, dadurch gekennzeichnet, daß die Mittel (51) zum Verstellen der die Fangleine (31) umlenkenden Rolle (32) durch einen Verstellzylinder (51) gebildet sind, der an dem Objekt (1) befestigt ist, wobei die Rolle (32) fest mit dem Kolben (36) des Verstellzylinders verbunden ist.

4. System nach Anspruch 3, dadurch gekennzeichnet, daß die Rolle (32) an einem Element (52) befestigt ist, welches um einen fest mit dem Objekt (1) verbundenen Punkt (53) verschwenkbar ist und welches in der Lage ist, unter der Wirkung der Verstellzylinders (51) in einer Rotationsbewegung auszufahren.

5. System nach den Ansprüchen 3 oder 4, dadurch gekennzeichnet, daß der Verstellzylinder (51) ein pyrotechnischer Verstellzylinder ist.

6. System nach einem der vorhergehenden Ansprüche, dadurch gekennzeichnet, daß die Fangleinen (211, 212, 31) Bänder aus einem undehnbaren Material sind.

7. System nach einem der vorhergehenden Ansprüche, dadurch gekennzeichnet, daß die Fangleinen (211, 212, 31) aus aromatischem Polyamid bestehen.

8. System nach einem der vorhergehenden Ansprüche, dadurch gekennzeichnet, daß das Objekt (1) ein an einem Fallschirm aufgehängtes Projektil ist.

9. System nach einem der vorhergehenden Ansprüche, dadurch gekennzeichnet, daß das Objekt (1) ein Untermunitionteil ist.
